# EUROPEAN PATENT SPECIFICATION

(11) **EP 2 561 646 B1**
(45) Date of publication and mention of the grant of the patent: **18.03.2015**
(21) Application number: 10850347.5
(22) Date of filing: 23.04.2010
(51) Int. Cl.: H04L 12/70, H04L 12/28

(54) **APPARATUSES AND METHODS FOR REGISTERING TRANSMISSION CAPACITIES IN A BROADBAND ACCESS NETWORK**
VORRICHTUNGEN UND VERFAHREN ZUR AUFZEICHNUNG VON ÜBERTRAGUNGSKAPAZITÄTEN IN EINEM BREITBANDZUGANGSNETZ
APPAREILS ET PROCÉDÉS D'ENREGISTREMENT DE CAPACITÉS DE TRANSMISSION DANS UN RÉSEAU D'ACCÈS À LARGE BANDE

(43) Date of publication of application: 27.02.2013
(73) Proprietor: Telefonaktiebolaget LM Ericsson (publ), 164 83 Stockholm (SE)
(72) Inventor: MELSEN, Torben, DK-7500 Holstebro (DK); LUDWIG, Reiner, 52393 Hürtgenwald (DE); MUELLER, Steven, West Vancouver British Columbia V7V 3z8 (CA)
(74) Representative: Zacco Sweden AB
(86) International application number: PCT/SE2010/050457
(87) International publication number: WO 2011/133080

(56) References cited:
- EP-A1- 1 589 707
- EP-A1- 1 876 766
- EP-A1- 2 076 076
- EP-A1- 2 151 948
- US-A1- 2007 248 007
- US-A1- 2009 089 431
- US-A1- 2009 238 200

## Description

### Technical field

The invention relates in general to broadband access networks, and in particular to apparatuses and methods for registering transmission capacities in a broadband access network. The invention also relates to computer program products for use in said apparatuses.

### Background

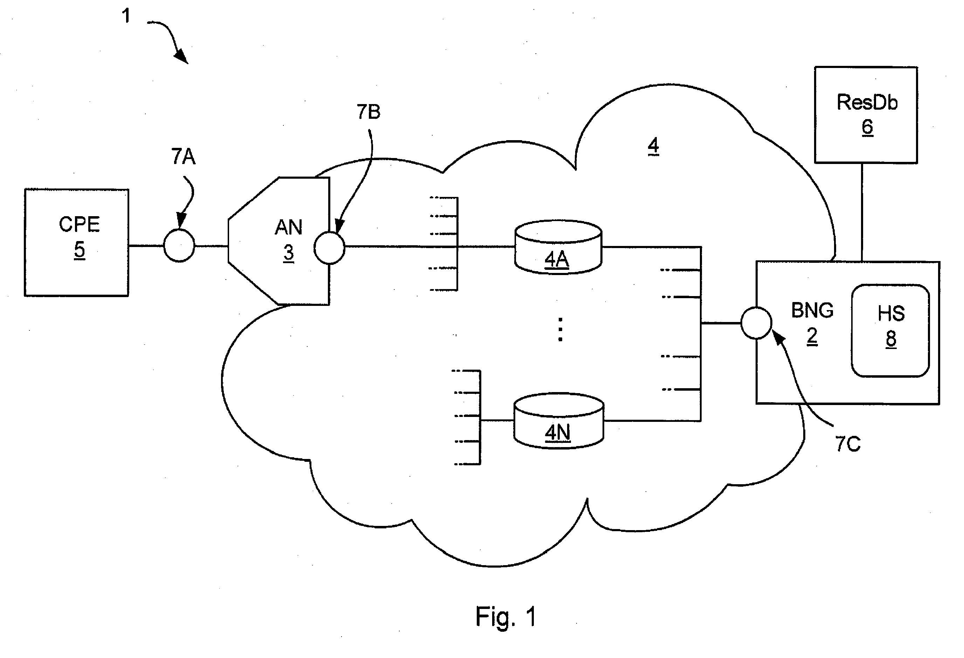

The Broadband Forum's specification TR-101 "Migration to Ethernet-Based DSL aggregation" is widely used as reference architecture for various broadband access network solutions. In the network architecture or topological model presented in TR-101 a network gateway node, i.e. a Broadband Network Gateway (BNG) or Broadband Remote Access Server (BRAS), sits at the core of the service providers (ISP) network and routes data traffic to/from the Ethernet aggregation network of the broadband access network from/to the ISP's backbone network. Through these network gateway nodes, the ISP's may, for example, enforce policy management and IP Quality of Service throughout the broadband access network. An example of such a broadband access network is shown in Fig. 1.

One of the mandatory tasks that must be performed by the network gateway node in a TR-101 context is hierarchical scheduling. A governing principle of a hierarchical scheduler (HS) is to model data traffic congestion points, or bottlenecks, in the broadband access network. This is performed in order for the hierarchical scheduler in the network gateway node, for example, to discard data traffic that may exceed the capacity of the modeled data traffic congestion points. Examples of data traffic congestion points that the hierarchical scheduler must be able to model are the access lines to the access nodes (7A in Fig. 1), the access node uplink interface (7B in Fig. 1) and the network gateway node downlink interface (7C in Fig. 1). Capacity information about these data traffic congestion points may be pre-provisioned in a resource database (ResDb) and sent to the hierarchical scheduler (HS). Alternatively, the congestion point capacity information may be determined from the static configuration of the hierarchical scheduler (HS) in the network gateway node. Access loop synch rates for the access lines to the access nodes (7A in Fig. 1) can be also learned via e.g. an Access Node Control Protocol (ANCP) messages from the access node (7A in Fig. 1).

### Summary

It is understood by the inventor that it is desirable to achieve a broadband access network which is adaptable to dynamic network behaviours.

This issue is addressed by an access node for use in a broadband access network, characterized in that the access node is configured to determine at least one characteristic in the access node pertaining to the uplink capacity of a logical link between the access node and an aggregation network node in the broadband access network; determine the uplink capacity of the logical link based on the at least one determined characteristic in the access node; and provide a network gateway node in the broadband access network with access to the determined uplink capacity of the logical link.

By having an access node configured as described above, a hierarchical scheduler in the network gateway node may automatically be provided access to continuously updated information regarding the uplink capacity of an access node's uplink interface. In this manner and in contrast to the existing manual pre-provisioning of this information in a resource database in accordance with the prior art, the hierarchical scheduler in the network gateway node may take dynamic network behaviour into account upon performing hierarchical scheduling. An illustrative example of such dynamic network behaviour may be the change in bandwidth of an access node's uplink interface resulting due to a failure of network connections and/or equipment.

An advantage of the above described access node is that it eliminates the cumbersome process of manually providing the information regarding the uplink capacity of an access node's uplink interface to the hierarchical scheduler. It also advantageously reduces the risk of having operators manually providing potentially erroneous information regarding the uplink capacity of an access node's uplink interface during the pre-provisioning of this information to the hierarchical scheduler. This may otherwise lead to a sub-optimal or poor hierarchical scheduling based on such erroneous information.

The access node may also be configured to provide the network gateway node with access to the determined uplink capacity of the logical link by sending the determined uplink capacity of the logical link to a resource database node comprised in or communicatively connected to the network gateway node. This also provides the advantage of not having to modify the hierarchical scheduler in the network gateway node in order for it to be able to receive continuously updated information regarding the uplink capacity of an access node's uplink interface according to the invention. Thus, the hierarchical scheduler in the network gateway node may simply continue to listen for update events from the resource database for obtaining the updated uplink capacity of an access node's uplink interface as it performs hierarchical scheduling, yet with a reduced risk of retrieving potentially erroneous information.

The access node may further be configured to send the determined uplink capacity of the logical link using the Access Node Control Protocol (ANCP). By using an already existing protocol conventionally used for example in reporting line speeds on individual access lines such as the access loop synch rate, only minor modifications of the network nodes in the broadband access network may be required. The access node may be arranged to extend the information comprised in current ANCP messages with the uplink capacity of the access node's uplink interface. Alternatively, the access node may use any other existing or new protocol capable of transferring information between the access node and the resource database.

Furthermore, the at least one characteristic pertaining to the uplink capacity of the logical link that the access node may comprise when determining the uplink capacity of the logical link may comprise at least one of the following characteristics: the speed of the uplink interface(s) in the access node; the number of uplink interfaces aggregated to form a link aggregation group (LAG) as the logical link; maximum allowed data traffic load on the logical link; the actual speed of the logical link; and/or the number of active physical links used by the logical link. Advantageously, this mixture of predetermined and dynamic attributes is accessible to and may be used by the access node in determining the uplink capacity of its uplink interface. It may also be noted that the aggregation network node may also be the network gateway node in the broadband access network.

The problem is also addressed by a method for registering transmission capacities in a broadband access network, said method being characterized in that it comprises the steps of: a) determining at least one characteristic in an access node pertaining to the uplink capacity of a logical link between the access node and an aggregation network node in the broadband access network; b) determining the uplink capacity of the logical link based on the determined at least one characteristic in the access node; and c) providing a network gateway node in the broadband access network with access to the determined uplink capacity of the logical link.

In the method described above, the steps a) to c) may be performed at start-up of the access node and/or upon detecting in the access node a change in any one or several of the characteristics in the access node pertaining to the uplink capacity of the logical link. This may advantagesouly ensure that the hierarchical scheduler in the network gateway node receives correct information regarding the uplink capacity of an access node's uplink interface from the start and/or is continuously allowed access to updated information regarding the uplink capacity of an access node's uplink interface.

The method may also comprise the steps of: waiting for a predetermined period of time upon detecting a change in any one or several of the characteristics in the access node pertaining to the uplink capacity of the logical link; and performing the steps a) to c) after the expiry of said predetermined period of time if the detected change in any one or several of the characteristics is still valid. This may advantageously limit the signalling in a frequently fluctuating environment, such as, for example, when a link repeatedly is going down and coming up.

The problem is further addressed by a resource database node comprised in or communicatively connected to a network gateway node in a broadband access network, characterized in that the resource database node is arranged to receive a message originating from an access node comprising a determined uplink capacity of a logical link between the access node and an aggregation network node in the broadband access network; and update information pertaining to the access node in the resource database node based on the determined uplink capacity of the logical link in the received message.

Furthermore, the problem is addressed by a method for registering transmission capacities in a resource database node comprised in or comunicatively connected to a network gateway node in a broadband access network, said method being characterized in that it comprises the steps of: receiving a message originating from an access node comprising a determined uplink capacity of a logical link between the access node and an aggregation network node in the broadband access network; and updating information pertaining to the access node in the resource database node based on the determined uplink capacity of the logical link in the received message.

Also, the problem is addressed by a network gateway node for use in a broadband access network, characterized in that the network gateway node is arranged to receive a message originating from an access node comprising a determined uplink capacity of a logical link between the access node and an aggregation network node in the broadband access network; and update hierarchical scheduling information pertaining to the access node used by a hierarchical scheduler in the network gateway node based on the determined uplink capacity of the logical link in the received message.

The problem is also addressed by a method for registering transmission capacities in a network gateway node for use in a broadband access network, said method being characterized in that the method comprises the steps of: receiving a message originating from an access node comprising a determined uplink capacity of a logical link between the access node and an aggregation network node in the broadband access network; and updating hierarchical scheduling information pertaining to the access node used by a hierarchical scheduler in the network gateway node based on the determined uplink capacity of the logical link in the received message.

The problem is also further addressed by a broadband access network comprising an access node, a resource database node and/or network gateway node as described above.

The problem is also further addressed by a computer program product for use in an access node in a broadband access network, which comprises computer readable code means, which when run in a processing unit in the access node causes said access node to perform the steps of: determining at least one characteristic in an access node pertaining to the uplink capacity of a logical link between the access node and an aggregation network node in the broadband access network; determining the uplink capacity of the logical link based on the determined at least one characteristic in the access node; and providing a network gateway node in the broadband access network with access to the determined uplink capacity of the logical link.

The problem is also further addressed by a computer program product for use in a resource database node in a broadband access network, which comprises computer readable code means, which when run in a processing unit in the resource database node causes said resource database node to perform the steps of: receiving a message originating from an access node comprising a determined uplink capacity of a logical link between an access node and an aggregation network node in the broadband access network; and updating information pertaining to the access node in the resource database node based on the determined uplink capacity of the logical link in the received message.

The problem is also further addressed by a computer program product for use in a network gateway node in a broadband access network, which comprises computer readable code means, which when run in a processing unit in the network gateway node causes said network gateway node to perform the steps of: receiving a message originating from an access node comprising a determined uplink capacity of a logical link between an access node and an aggregation network node in the broadband access network; and updating hierarchical scheduling information pertaining to the access node used by a hierarchical scheduler in the network gateway node based on the determined uplink capacity of the logical link in the received message. Each of the computer program products described above may comprise code means which is stored on a readable storage medium.

### Brief description of the drawings

The objects, advantages and effects as well as features of the invention will be more readily understood from the following detailed description of exemplary embodiments of the invention when read together with the accompanying drawings, in which:
Fig. 1 illustrates an example of a broadband access network.
Fig. 2 shows a flowchart of a method according to an embodiment of the invention.
Fig. 3 shows a flowchart of another method according to an embodiment of the invention.
Fig. 4 shows a flowchart of a further method according to an embodiment of the invention.

### Detailed description

Fig. 1 illustrates a broadband access network 1 wherein a network gateway node BNG 2 is located in between an aggregation network 4 comprising the aggregation network nodes 4A-4N and a backbone network (not shown) of an Internet Service Provider (ISP). The network gateway node BNG 2 may also be referred to as a Broadband Network Gateway (BNG), a Broadband Remote Access Server (BRAS) or a Network Access Server (NAS). The network gateway node BNG 2 may also comprise or be communicatively connected to a resource database ResDb 6. Through the aggregation network 4 and the aggregation network nodes 4A-4N, the network gateway node BNG 2 may be connected to a plurality of access nodes AN 3, e.g. a Digital Subscriber Line Access Multiplexer (DSLAM), an optical network unit (ONU), or similar. The access nodes AN 3 may in turn be connected to a plurality of customer presmises equipments CPE 5, i.e. the subscribers.

A hierarchical scheduler HS 8 is provided in the network gateway node BNG 2 for performing hierarchical scheduling. The hierarchical scheduler HS 8 is configured to model data traffic congestion points, also referred to as bottlenecks, in the broadband access network 1. The hierarchical scheduler HS 8 models these data traffic congestion points in order to be able to, for example, discard data traffic that may exceed the capacity of the data traffic congestion points.

In Fig. 1, a number of different data traffic congestion points 7A-7C that the hierarchical scheduler HS 8 is configured to model are shown. The data traffic congestion points 7A-7C shown are: the access lines 7A between the customer premises equipment CPE 5 and the access node AN, 3; the access node uplink interface(s) 7B in the accesss node AN 3; and the network gateway node downlink interface 7C in the network gateway node BNG 2. However, in order for the hierarchical scheduler HS 8 to be able to perform the hierarchical scheduling in the network gateway node BNG 2 information regarding the capacities of these data traffic congestion points 7A-7C have to be provided to the hierarchical scheduler HS 8 in the network gateway node BNG 2.

Information regarding the capacity of the access lines 7A between the customer premises equipment CPE 5 and the access node AN 3 may be explicitly and dynamically provisioned from the inventory management OSS system in the access node AN 3 to the resource database ResDb 6 or may be dynamically detected and provisioned by an Access Node Control Protocol (ANCP) in the access node AN 3 to the network gateway node BNG 2. ANCP may provide a mechanism in the access node AN 3 to communicate the access-loop status, attributes and current DSL synchronization rate of the access lines between the access node AN 3 and the customer premises equipments CPE 5 up to the network gateway node BNG 2. Information regarding the capacity of the network gateway node downlink interface 7C in the network gateway node BNG 2 may be detected directly by the static configuration/ inventory in the network gateway node BNG 2 itself.

However, according to the prior art, information regarding capacity of the access node uplink interface(s) 7B in the accesss node AN 3 must be manually pre-provisioned and configured in the resource database ResDb 6. The resource database ResDb 6 may then be arranged to push this information to the network gateway and the hierarchical scheduler upon a session establishment or upon a particular event or action. An event or action may in turn be configured to be triggered in the resource database ResDb 6 to update the network gateway node BNG 2 and/or the hierarchical scheduler HS 8 in the network gateway node BNG 2. The hierarchical scheduler HS 8 in the network gateway node BNG 2 may also be configured to query the resource database ResDb 6 in order to retrieve and obtain this information. The pre-provisioning and configuration of the access node AN 3 uplink resource into the resource database ResDb 6 is a cumbersome process requiring manual intervention. By doing so, there is a risk that the operators accidentally may provide erroneous information regarding the uplink capacity of the access node uplink interface(s) 7B in the accesss node AN 3. Inherently, this may lead to the hierarchical scheduler HS 8 in the network gateway node BNG 2 performing a sub-optimal or poor hierarchical scheduling based on this erroneous information. Furthermore, this existing manual pre-provisioning and configuration does not take potential dynamic network behavior into account, e.g. that the bandwidth of the available access node AN 3 uplink interface(s) 7B may change over time, for example, as a result of a failure on network connections or equipment.

Therefore, according to an embodiment of the invention, the access node AN 3 is configured to determine at least one characteristic in the access node AN 3 pertaining to the uplink capacity of a logical link between the access node AN 3 and the aggregation network node 4A in the broadband access network 1. One characteristic or attribute in the access node AN 3 that may partly determine the uplink capacity of this logical link may be the actually used interface speed of the uplink interface(s) 7B in the access node AN 3. The actually used interface speed of the uplink interface(s) 7B in the access node AN 3 may influence the uplink capacity of the logical link if, for example, there are multiple interface speeds allowed for the particular type of uplink interface(s) 7B being used in the access node AN 3 and the interface speed that is actually used may be ambiguously configured. The access node AN 3 may determine the interface speed that has been negotiated between the access node AN 3 and the aggregation network node 4A from its inventory comprising its configured settings. Another characteristic in the access node AN 3 that may partly determine the uplink capacity of the logical link may be the number of uplink interfaces 7B aggregated to form a link aggregation group (LAG) so as to comprise the single logical link. If uplink interfaces 7B are removed from or added to a LAG, the uplink capacity of the logical link will also change. The access node AN 3 may determine the number of uplink interfaces 7B aggregated to form a link aggregation group (LAG) by inspecting the inventory of the access node AN 3. A further characteristic in the access node AN 3 that may partly determine the uplink capacity of the logical link may be the maximum allowed data traffic load on the logical link. The single logical link may namely be subjected to rate limitation which may discard data traffic if the data traffic on the single logical link is close to being exceeded. The access node AN 3 may determine the maximum allowed data traffic load on the logical link by inspecting the inventory of the access node AN 3.

The above mentioned characteristics are more or less pre-provisioned or predetermined attributes in the access node AN 3, but the uplink capacity of the logical link may also partly be determined by more dynamic characteristics or attributes. These dynamic characteristics or attributes may also be determined by the access node AN 3. One dynamic characteristic in the access node AN 3 that may partly determine the uplink capacity of this logical link may be the actual link speed of the logical link. The uplink interface(s) 7B in the access node AN 3 may be configured for various interface speeds, for example, 1 or 10 Gbits/s, etc., which may be negotiated with the aggregation network node 4A, but the inherent capabilities of the aggregation network node 4A may still limit the actual link speed. Therefore, the access node AN 3 may be configured to monitor the actual link speed of the logical link by inspecting the inventory of the access node AN 3. Another dynamic characteristic in the access node AN 3 that may partly determine the uplink capacity of this logical link may be the number of active physical links used by the logical link. The number of active physical links used by the logical link may vary caused by interfaces or connections failing or being repaired, or simply because a network operator removes one or several physical uplink connections, intentionally or by accidence. Therefore, the access node AN 3 may be configured to also monitor how many physical links that are actively being used by the logical link by inspecting the inventory of the access node AN 3.

Based on one or several of these predetermined or dynamic characteristics, the access node AN 3 is also configured to determine the uplink capacity of the logical link. For example, assume that the uplink consists of 2 × 1 Gbits/s Ethernet interfaces aggregated together in a LAG thus forming a single logical link between the access node AN 3 and the aggregation network node 4A. Further assume that the maximum load of the single logical link is set to 80%. Then, if all relevant interfaces of the uplink interface(s) 7B are working properly in their normal configurations and negotiated speeds, and no physical connections to these relevant interfaces are broken or down, the access node AN 3 may calculate the capacity of the data traffic congestion point 7B as (2 × 1 Gbits/s) × 0.8 = 1.6 Gbits/s. However, in case a relevant interface of the uplink interface(s) 7B goes down, the access node AN 3 may be configured to re-calculate the capacity of the data traffic congestion point 7B taking the malfunction into account. Note that the access node AN 3 may also be configured to re-calculate the capacity of the data traffic congestion point 7B based on any other change in the characteristics described above.

As the uplink capacity of the logical link has beeen determined, the access node 3 may further be configured to provide a network gateway node BNG 2 in the broadband access network 1 with access to the determined uplink capacity of the logical link. This may, for example, be performed by the access node AN 3 by sending the determined uplink capacity of the logical link directly or indirectly to a resource database node ResDb 6 that is comprised in or communicatively connected to the network gateway node BNG 2. The determined uplink capacity of the logical link may, for example, be directly sent to the resource database node ResDb 6 by using a tunnelling or encapsulation protocol between the two network nodes, or by using another specific protocol capable of transporting information regarding the determined uplink capacity of the logical link from the access node AN 3 to the resource database ResDb 6. Alternatively, the access node AN 3 may be configured to send the determined uplink capacity of the logical link by using the already existing communication protocol, Access Node Control Protocol (ANCP), between the access node AN 3 and the network gateway node BNG 2. In this case, the network gateway node BNG 2 may be arranged to receive and provide this information to the resource database ResDb 6 and/or directly to the hierarchical scheduler HS 8. However, the ANCP message would have to be extended so as to be able to comprise the information regarding the determined uplink capacity of the logical link, or a new ANCP protocol message has to be defined. Irrespective of which transmission arrangement is used by the access node AN 3, the transmitted information may preferably at least comprise an access node identification, which identifies the access node AN 3 to the resource database ResDb 6 or to the hierarchical scheduler HS 8 in the network gateway node BNG 2, and the current capacities of the access node AN 3 uplink capacity, preferably both downstream and upstream. The access node identification may also comprise particular ports or lines identifiers of the ports or lines of the access node AN 3 uplink that carries the capacities of the access node AN 3. Optionally, the transmittted information may further comprise a reason for sending updated information, such as, for example, if the update is a periodic update, if the interface speed of the uplink interface(s) 7B has been changed, if a active physical link of the uplink interface(s) 7B has gone down/up, or the rate limitation on the logical link has changed, etc.

It should also be noted that the access node AN 3 may be configured to determine the characteristic(s), calculate the uplink capacity of the logical link based on the characteristic(s) and provide the network gateway node BNG 2 with access to the determined uplink capacity of the logical link at start-up of the access node AN 3 or whenever the uplink capacity of the logical link changes. However, in the latter case, a hysteresis or delay may also be implemented in the access node AN 3 which waits for a predetermined period of time upon detecting a change in any one or several of the characteristics in the access node AN 3 pertaining to the uplink capacity of the logical link, and only updates the uplink capacity of the logical link if the detected change in any one or several of the characteristics is still valid upon expiry of the predetermined period of time. This may, for example, be advantageous if an active physical link in the the uplink interface(s) 7B repeatedly is going down and coming up.

Furthermore, in order to function and co-operate in conjunction with the access node AN 3, the resource database node ResDb 6 is configured, according to an embodiment of the invention, to receive a message originating from the access node AN 3 comprising a determined uplink capacity of a logical link between the access node AN 3 and an aggregation network node 4A in the broadband access network 1. This may be performed in accordance with any one of the transmission arrangements previously described in reference to the access node AN 3. The resource database node ResDb 6 is also configured to update the hierarchical information regarding the uplink capacity of the logical link in the resource database node ResDb 6 pertaining to the access node AN 3 based on the determined uplink capacity of the logical link in the received message. Upon a session establishment with the network gateway node BNG 2, or triggered by another event or action, the resource database node ResDb 6 may then be configured to push the continuously updated information regarding the capacities of the data traffic congestion points 7B, i.e. the uplink interface(s) 7B of the access node AN 3, to the network gateway node BNG 2 and the hierarchical scheduler HS 8. Also, the hierarchical scheduler HS 8 in the network gateway node BNG 2 may query the resource database node ResDb 6 in order to retrieve and obtain the continuously updated information regarding the capacities of the data traffic congestion points 7B, i.e. the uplink interface(s) 7B of the access node AN 3.

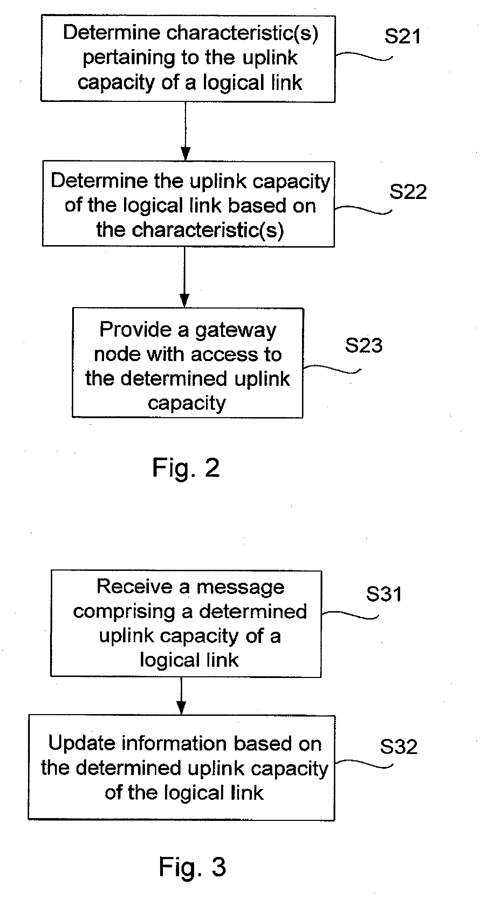

Fig. 2 shows a flowchart of a method for registering transmission capacities in a broadband access network 1 according to an embodiment of the invention. In step S21, an access node AN 3 may determine at least one characteristic in the access node AN 3 which pertains to the uplink capacity of a logical link between the access node AN3 and an aggregation network node 4A in the broadband access network 1. In step S22, the access node AN 3 may determine the uplink capacity of the logical link based on the at least one characteristic in the access node AN 3 determined in step S21. The uplink capacity of the logical link may be calculated based on one or several of the characteristics previously described above. In step S23, the access node AN 3 may provide a network gateway node BNG 2 in the broadband access network 1 with access to the uplink capacity of the logical link determined in step S22. This may, for example, be performed by using any one of the transmission arrangements previously described above to update the information in a resource database ResDb 6 and/or hierarchical scheduler 8 with the recently calculated uplink capacity of the logical link from the uplink interface(s) 7B of the access node AN3 in the broadband access network 1.

Fig. 3 shows a flowchart of a method for registering transmission capacities in a broadband access network 1 according to another embodiment of the invention. In step S31, a resource database node ResDb 6 comprised in or comunicatively connected to a network gateway node BNG 2 in a broadband access network 1 may receive a message originating from an access node AN 3. Alternatively, the network gateway node BNG 2 may in this step receive the message originating from an access node AN 3. The message may comprise an uplink capacity of the logical link from the uplink interface(s) 7B of the access node AN3 to the aggregation network node 4A in the broadband access network 1. In step S32, the resource database node ResDb 6 may update its information content pertaining to the access node AN 3 based upon the uplink capacity of the logical link comprised in the message received in step S31. According to the other alternative, the network gateway node BNG 2 may in this step update the hierarchical information in, and/or used by, the hierarchical scheduler 8 pertaining to the access node AN 3 based upon the uplink capacity of the logical link comprised in the message received in step S31.

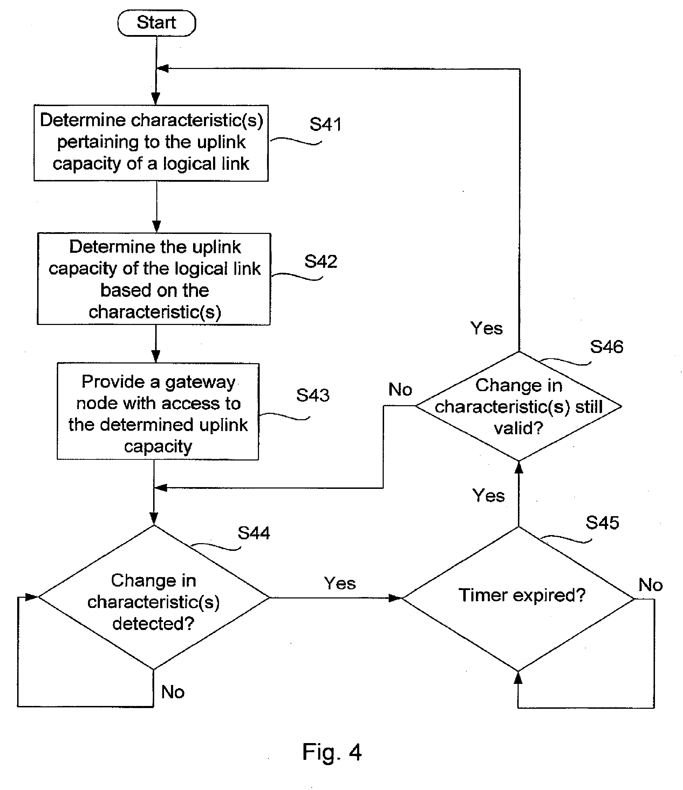

Fig. 4 shows a flowchart of a method for registering transmission capacities in a broadband access network 1 according to a further embodiment of the invention. The steps S41-S43 in this embodiment are the same as the steps S21-S23 in the embodiment described above in reference to Fig. 2. In step S44, the access node AN 3 may continously monitor the at least one characteristic determined in step S41 such that the access node AN 3 may detect as a change occurs in the at least one characteristic. If a change is detected, the access node AN 3 may in step S45 wait for a predetermined period of time. This may be performed by, for example, starting a timer in the access node AN 3 upon detecting a change in the at least one characteristic. After the predetermined period of time has expired or upon the expiry of the timer in the access node AN 3, the access node AN 3 may check if the change in the the at least one characteristic is still valid. If the at least one characteristic has resumed its previous state, the access node AN 3 may return to step S44 and monitor the at least one characteristic. However, if the at least one characteristic has remain in the state to which it changed, the access node AN 3 may return to step S41 and re-calculate the uplink capacity of the logical link from the uplink interface(s) 7B of the access node AN3 to the aggregation network node 4A in the broadband access network 1.

It should also be noted that any one of the methods described in the embodiment above may be performed at start-up of the access node AN 3 and/or upon detecting in the access node AN 3 a change in any one or several of the characteristics in the access node AN 3 pertaining to the uplink capacity of the logical link. This ensure that the hierarchical scheduler HS 8 in the network gateway node BNG 2 receives correct information regarding the uplink capacity of the uplink interface of the access node AN 3 from the start and/or is continuously allowed access to updated information regarding the uplink capacity of the uplink interface of the access node AN 3 by means of the resource database node ResDb 6.

The description above is of the best mode presently contemplated for practising the present invention. The description is not intended to be taken in a limiting sense, but is made merely for the purpose of describing the general principles of the invention. The scope of the present invention should only be ascertained with reference to the issued claims.

## Claims

1. An access node (3) for use in a broadband access network (1), **characterized in that** the access node (3) is configured to
determine at least one characteristic in the access node (3) pertaining to the uplink capacity of a logical link between the access node (3) and an aggregation network node (2; 4A, ..., 4N) in the broadband access network (1);
determine the uplink capacity of the logical link based on the at least one determined characteristic in the access node (3); and
provide a network gateway node (2) in the broadband access network (1) with access to the determined uplink capacity of the logical link.

2. An access node (3) according to claim 1, further being configured to provide the network gateway node (2) with access to the determined uplink capacity of the logical link by sending the determined uplink capacity of the logical link to a resource database node (6) comprised in or communicatively connected to the network gateway node (2).

3. An access node (3) according to claim 2, further being configured to send the determined uplink capacity of said logical link using the Access Node Control Protocol (ANCP).

4. An access node (3) according to any one of the claims 1-3, wherein the at least one characteristic in the access node (3) pertaining to the uplink capacity of the logical link comprises at least one of the following characteristics: the speed of the uplink interface(s) in the access node (3); the number of uplink interfaces aggregated to form a link aggregation group (LAG) as the logical link; maximum allowed data traffic load on the logical link; the actual speed of the logical link; and/or the number of active physical links used by the logical link.

5. An access node (3) according to any one of the claims 1-4, wherein the aggregation network node is the network gateway node (2) in the broadband access network (1).

6. A method for registering transmission capacities in a broadband access network (1), said method being **characterized in that** it comprises the steps of:
a) determining at least one characteristic in an access node (3) pertaining to the uplink capacity of a logical link between the access node (3) and an aggregation network node (2; 4A, ..., 4N) in the broadband access network (1);
b) determining the uplink capacity of the logical link based on the determined at least one characteristic in the access node (3); and
c) providing a network gateway node (2) in the broadband access network (1) with access to the determined uplink capacity of the logical link.

7. A method according to claim 6, wherein the steps a) to c) are performed at start-up of the access node (3) and/or upon detecting in the access node (3) a change in any one or several of the characteristics in the access node (3) pertaining to the uplink capacity of the logical link.

8. A method according to claim 7, further comprising the steps of:
d) waiting for a predetermined period of time upon detecting a change in any one or several of the characteristics in the access node (3) pertaining to the uplink capacity of the logical link; and
e) performing the steps a) to c) after the expiry of said predetermined period of time if the detected change in any one or several of the characteristics is still valid.

9. A resource database node (6) comprised in or comunicatively connected to a network gateway node (2) in a broadband access network (1), **characterized in that** the resource database node (6) is arranged to
receive a message originating from an access node (3) comprising a determined uplink capacity of a logical link between the access node (3) and an aggregation network node (2; 4A, ..., 4N) in the broadband access network (1); and
update information pertaining to the access node (3) in the resource database node (6) based on the determined uplink capacity of the logical link in the received message.

10. A method for registering transmission capacities in a resource database node (6) comprised in or comunicatively connected to a network gateway node (2) in a broadband access network (1), said method being **characterized in that** the method comprises the steps of:
receiving a message originating from an access node (3) comprising a determined uplink capacity of a logical link between the access node (3) and an aggregation network node (2; 4A, ..., 4N) in the broadband access network (1); and
updating information pertaining to the access node (3) in the resource database node (6) based on the determined uplink capacity of the logical link in the received message.

11. A network gateway node (2) for use in a broadband access network (1),
**characterized in that** the network gateway node (2) is arranged to
receive a message originating from an access node (3) comprising a determined uplink capacity of a logical link between the access node (3) and an aggregation network node (2; 4A, ..., 4N) in the broadband access network (1); and
update hierarchical scheduling information pertaining to the access node (3) used by a hierarchical scheduler (8) in the network gateway node (2) based on the determined uplink capacity of the logical link in the received message.

12. A method for registering transmission capacities in a network gateway node (2) for use in a broadband access network (1), said method being **characterized in that** the method comprises the steps of:
receiving a message originating from an access node (3) comprising a determined uplink capacity of a logical link between the access node (3) and an aggregation network node (2; 4A, ..., 4N) in the broadband access network (1); and
updating hierarchical scheduling information pertaining to the access node (3) used by a hierarchical scheduler (8) in the network gateway node (2) based on the determined uplink capacity of the logical link in the received message.

13. A broadband access network (1) comprising an access node (3) according to any one of the claims 1-5, a resource database node (6) according to claim 9 and/or a network gateway node (2) according to claim 11.

14. A computer program product for use in an access node (3) in a broadband access network (1), which comprises computer readable code means, which when run in a processing unit in the access node (3) causes said access node (3) to perform the steps of:
determining at least one characteristic in an access node (3) pertaining to the uplink capacity of a logical link between the access node (3) and an aggregation network node (2; 4A, ..., 4N) in the broadband access network (1);
determining the uplink capacity of the logical link based on the determined at least one characteristic in the access node (3); and
providing a network gateway node (2) in the broadband access network (1) with access to the determined uplink capacity of the logical link.

15. A computer program product according claim 14, comprising computer readable code means, which when run in the processing unit in the access node (3) causes the access node (3) to further perform the steps according to claim 7 or 8.

16. A computer program product for use in a resource database node (6) in a broadband access network (1), which comprises computer readable code means, which when run in a processing unit in the resource database node (6) causes said resource database node (6) to perform the steps of:
receiving a message originating from an access node (3) comprising a determined uplink capacity of a logical link between an access node (3) and an aggregation network node (2; 4A, ..., 4N) in the broadband access network (1); and
updating information pertaining to the access node (3) in the resource database node (6) based on the determined uplink capacity of the logical link in the received message.

17. A computer program product for use in a network gateway node (2) in a broadband access network (1), which comprises computer readable code means, which when run in a processing unit in the network gateway node (2) causes said network gateway node (2) to perform the steps of:
receiving a message originating from an access node (3) comprising a determined uplink capacity of a logical link between an access node (3) and an aggregation network node (2; 4A, ..., 4N) in the broadband access network (1); and
updating hierarchical scheduling information pertaining to the access node (3) used by a hierarchical scheduler (8) in the network gateway node (2) based on the determined uplink capacity of the logical link in the received message.

18. A computer program product according any one of the claims 14-17, wherein said code means is stored on a readable storage medium.

## Patentansprüche

1. Zugangsknoten (3) zur Verwendung in einem Breitbandzugangsnetz (1), **dadurch gekennzeichnet, dass** der Zugangsknoten (3) für
das Bestimmen zumindest eines Merkmals im Zugangsknoten (3) in Bezug auf die Uplink-Kapazität einer logischen Verbindung zwischen dem Zugangsknoten (3) und einem Aggregationsnetzknoten (2; 4A, ..., 4N) im Breitbandzugangsnetz (1);
das Bestimmen der Uplink-Kapazität der logischen Verbindung auf Basis des zumindest eines bestimmten Merkmals im Zugangsknoten (3); und
das Bereitstellen eines Netz-Gateway-Knotens (2) im Breitbandzugangsnetz (1) mit Zugang zur bestimmten Uplink-Kapazität der logischen Verbindung ausgebildet ist.

2. Zugangsknoten (3) nach Anspruch 1, welcher zusätzlich dazu ausgebildet ist, den Netz-Gateway-Knoten (2) mit Zugang zur bestimmten Uplink-Kapazität der logischen Verbindung durch Versenden der bestimmten Uplink-Kapazität der logischen Verbindung an einen Ressource-Datenbank-Knoten (6) bereitzustellen, der im Netz-Gateway-Knoten (2) enthalten ist oder mit diesem in kommunikativer Verbindung steht.

3. Zugangsknoten (3) nach Anspruch 2, welcher zusätzlich für das Versenden der bestimmten Uplink-Kapazität der logischen Verbindung unter Anwendung des Zugangsknoten-Steuerungsprotokolls (Access Node Control Protocol (ANCP)) ausgebildet ist.

4. Zugangsknoten (3) nach einem der Ansprüche 1-3, wobei das zumindest eine Merkmal im Zugangsknoten (3) in Bezug auf die Uplink-Kapazität der logischen Verbindung zumindest eines der folgenden Merkmale umfasst: die Geschwindigkeit der Uplink-Schnittstelle(n) im Zugangsknoten (3); die Zahl von Uplink-Schnittstellen, die für die Bildung einer Verbindungsaggregationsgruppe (LAG) als der logischen Verbindung aggregiert sind; höchstzulässige Datenverkehrslast der logischen Verbindung; die tatsächliche Geschwindigkeit der logischen Verbindung; und/oder die Zahl von aktiven physikalischen Verbindungen, die von der logischen Verbindung verwendet werden.

5. Zugangsknoten (3) nach einem der Ansprüche 1-4, wobei der Aggregationsnetzknoten der Netz-Gateway-Knoten (2) im Breitbandzugangsnetz (1) ist.

6. Verfahren zur Aufzeichnung von Übertragungskapazitäten in einem Breitbandzugangsnetz (1), welches Verfahren **dadurch gekennzeichnet ist, dass** es die Schritte umfasst:
a) das Bestimmen zumindest eines Merkmals in einem Zugangsknoten (3) in Bezug auf die Uplink-Kapazität einer logischen Verbindung zwischen dem Zugangsknoten (3) und einem Aggregationsnetzknoten (2; 4A, ..., 4N) im Breitbandzugangsnetz (1);
b) das Bestimmen der Uplink-Kapazität der logischen Verbindung auf Basis des zumindest einen bestimmten Merkmals im Zugangsknoten (3); und
c) das Bereitstellen eines Netz-Gateway-Knotens (2) im Breitbandzugangsnetz (1) mit Zugang zur bestimmten Uplink-Kapazität der logischen Verbindung.

7. Verfahren nach Anspruch 6, wobei der Schritt a) bis c) beim Start-up des Zugangsknotens (3) und/oder nach Erfassen im Zugangsknoten (3) einer Änderung eines oder mehrerer der Merkmale im Zugangsknoten (3) in Bezug auf die Uplink-Kapazität der logischen Verbindung durchgeführt werden.

8. Verfahren nach Anspruch 7, zusätzlich umfassend die Schritte:
d) das Abwarten einer vorbestimmten Zeitdauer nach Erfassen einer Änderung eines oder mehrerer der Merkmale im Zugangsknoten (3) in Bezug auf die Uplink-Kapazität der logischen Verbindung; und
e) das Durchführen des Schritts a) bis c) nach dem Ablauf der vorbestimmten Zeitdauer, falls die erfasste Änderung eines oder mehrerer der Merkmale immer noch gültig ist.

9. Ressource-Datenbank-Knoten (6), der in einem Netz-Gateway-Knoten (2) in einem Breitbandzugangsnetz (1) enthalten ist oder mit diesem in kommunikativer Verbindung steht, **dadurch gekennzeichnet, dass** der RessourceDatenbank-Knoten (6) dazu ausgelegt ist,
eine Mitteilung zu erhalten, die von einem Zugangsknoten (3) stammt, umfassend eine bestimmte Uplink-Kapazität einer logischen Verbindung zwischen dem Zugangsknoten (3) und einem Aggregationsnetzknoten (2; 4A, ..., 4N) im Breitbandzugangsnetz (1); und
Informationen in Bezug auf den Zugangsknoten (3) im RessourceDatenbank-Knoten (6) auf Basis der bestimmten Uplink-Kapazität der logischen Verbindung in der erhaltenen Mitteilung aufzudatieren.

10. Verfahren zur Aufzeichnung von Übertragungskapazitäten in einem Ressource-Datenbank-Knoten (6), der in einem Netz-Gateway-Knoten (2) in einem Breitbandzugangsnetz (1) enthalten ist oder mit diesem in kommunikativer Verbindung steht, welches Verfahren **dadurch gekennzeichnet ist, dass** das Verfahren die Schritte umfasst:
das Erhalten einer Mitteilung, die von einem Zugangsknoten (3) stammt, umfassend eine bestimmte Uplink-Kapazität einer logischen Verbindung zwischen dem Zugangsknoten (3) und einem Aggregationsnetzknoten (2; 4A, ..., 4N) im Breitbandzugangsnetz (1); und
das Aufdatieren von Informationen in Bezug auf den Zugangsknoten (3) im Ressource-Datenbank-Knoten (6) auf Basis der bestimmten Uplink-Kapazität der logischen Verbindung in der erhaltenen Mitteilung.

11. Netz-Gateway-Knoten (2) zur Verwendung in einem Breitbandzugangsnetz (1), **dadurch gekennzeichnet, dass** der Netz-Gateway-Knoten (2) dazu ausgelegt ist,
eine Mitteilung zu erhalten, die von einem Zugangsknoten (3) stammt, umfassend eine bestimmte Uplink-Kapazität einer logischen Verbindung zwischen dem Zugangsknoten (3) und einem Aggregationsnetzknoten (2; 4A, ..., 4N) im Breitbandzugangsnetz (1); und
hierarchische Planungsinformationen in Bezug auf den Zugangsknoten (3) verwendet von einem hierarchischen Scheduler (8) im Netz-Gateway-Knoten (2) auf Basis der bestimmten Uplink-Kapazität der logischen Verbindung in der erhaltenen Mitteilung aufzudatieren.

12. Verfahren zur Aufzeichnung von Übertragungskapazitäten in einem Netz-Gateway-Knoten (2) zur Verwendung in einem Breitbandzugangsnetz (1), welches Verfahren **dadurch gekennzeichnet ist, dass** das Verfahren die Schritte umfasst:
das Erhalten einer Mitteilung, die von einem Zugangsknoten (3) stammt, umfassend eine bestimmte Uplink-Kapazität einer logischen Verbindung zwischen dem Zugangsknoten (3) und einem Aggregationsnetzknoten (2; 4A, ..., 4N) im Breitbandzugangsnetz (1); und
das Aufdatieren von hierarchischen Planungsinformationen in Bezug auf den Zugangsknoten (3) verwendet von einem hierarchischen Scheduler (8) im Netz-Gateway-Knoten (2) auf Basis der bestimmten Uplink-Kapazität der logischen Verbindung in der erhaltenen Mitteilung.

13. Breitbandzugangsnetz (1) umfassend einen Zugangsknoten (3) nach einem der Ansprüche 1-5, einen Ressource-Datenbank-Knoten (6) nach Anspruch 9 und/oder einen Netz-Gateway-Knoten (2) nach Anspruch 11.

14. Computerprogrammprodukt zur Verwendung in einem Zugangsknoten (3) in einem Breitbandzugangsnetz (1), welches ein computerlesbares Codemittel umfasst, das, wenn es in einer Behandlungseinheit im Zugangsknoten (3) läuft, den Zugangsknoten (3) dazu veranlasst, die Schritte durchzuführen:
das Bestimmen zumindest eines Merkmals in einem Zugangsknoten (3) in Bezug auf die Uplink-Kapazität einer logischen Verbindung zwischen dem Zugangsknoten (3) und einem Aggregationsnetzknoten (2; 4A, ..., 4N) im Breitbandzugangsnetz (1);
das Bestimmen der Uplink-Kapazität der logischen Verbindung auf Basis des zumindest einen bestimmten Merkmals im Zugangsknoten (3); und
das Bereitstellen eines Netz-Gateway-Knotens (2) im Breitbandzugangsnetz (1) mit Zugang zur bestimmten Uplink-Kapazität der logischen Verbindung.

15. Computerprogrammprodukt nach Anspruch 14, umfassend ein computerlesbares Codemittel, das, wenn es in der Behandlungseinheit im Zugangsknoten (3) läuft, den Zugangsknoten (3) dazu veranlasst, weiter die Schritte nach Anspruch 7 oder 8 durchzuführen.

16. Computerprogrammprodukt zur Verwendung in einem Ressource-Datenbank-Knoten (6) in einem Breitbandzugangsnetz (1), welches ein computerlesbares Codemittel umfasst, das, wenn es in einer Behandlungseinheit im Ressource-Datenbank-Knoten (6) läuft, den Ressource-Datenbank-Knoten (6) dazu veranlasst, die Schritte durchzuführen:
das Erhalten einer Mitteilung, die von einem Zugangsknoten (3) stammt, umfassend eine bestimmte Uplink-Kapazität einer logischen Verbindung zwischen einem Zugangsknoten (3) und einem Aggregationsnetzknoten (2; 4A, ..., 4N) im Breitbandzugangsnetz (1); und
das Aufdatieren von Informationen in Bezug auf den Zugangsknoten (3) im Ressource-Datenbank-Knoten (6) auf Basis der bestimmten Uplink-Kapazität der logischen Verbindung in der erhaltenen Mitteilung.

17. Computerprogrammprodukt zur Verwendung in einem Netz-Gateway-Knoten (2) in einem Breitbandzugangsnetz (1), welches ein computerlesbares Codemittel umfasst, das, wenn es in einer Behandlungseinheit im Netz-Gateway-Knoten (2) läuft, den Netz-Gateway-Knoten (2) dazu veranlasst, die Schritte durchzuführen:
das Erhalten einer Mitteilung, die von einem Zugangsknoten (3) stammt, umfassend eine bestimmte Uplink-Kapazität einer logischen Verbindung zwischen einem Zugangsknoten (3) und einem Aggregationsnetzknoten (2; 4A, ..., 4N) im Breitbandzugangsnetz (1); und
das Aufdatieren von hierarchischen Planungsinformationen in Bezug auf den Zugangsknoten (3) verwendet von einem hierarchischen Scheduler (8) im Netz-Gateway-Knoten (2) auf Basis der bestimmten Uplink-Kapazität der logischen Verbindung in der erhaltenen Mitteilung.

18. Computerprogrammprodukt nach einem der Ansprüche 14-17, wobei das Codemittel in einem lesbaren Speichermedium gespeichert ist.

## Revendications

1. Noeud d'accès (3) à utiliser dans un réseau d'accès à large bande (1), **caractérisé en ce que** le noeud d'accès (3) est configuré pour
déterminer au moins une caractéristique dans le noeud d'accès (3) se rapportant à la capacité de liaison montante d'un lien logique entre le noeud d'accès (3) et un noeud de réseau d'agrégation (2; 4A, ..., 4 N) dans le réseau d'accès à large bande (1);
déterminer la capacité de liaison montante du lien logique sur la base de l'au moins une caractéristique déterminée dans le noeud d'accès (3); et
fournir un noeud de passerelle de réseau (2) dans le réseau d'accès à large bande (1) avec accès à la capacité de liaison montante déterminée du lien logique.

2. Noeud d'accès (3) selon la revendication 1, étant en outre configuré pour fournir au noeud de passerelle de réseau (2) d'un accès à la capacité de liaison montante déterminée du lien logique en envoyant la capacité de liaison montante déterminée du lien logique à un noeud de base de données de ressources (6) comprise dans ou reliée de manière communicative au noeud de passerelle de réseau (2).

3. Noeud d'accès (3) selon la revendication 2, étant en outre configuré pour envoyer la capacité de liaison montante déterminé dudit lien logique en utilisant le protocole de contrôle de noeud d'accès (PCNA) (Access Node Control Protocol (ANCP).

4. Noeud d'accès (3) selon l'une quelconque des revendications 1 à 3, dans lequel l'au moins une caractéristique dans le noeud d'accès (3) se rapportant à la capacité de liaison montante du lien logique comprend au moins l'une des caractéristiques suivantes: la vitesse de l'interface ou des interfaces de liaison montante dans le noeud d'accès (3); le nombre d'interfaces de liaison montante agrégées pour former un groupe d'agrégation de lien (GAL) en tant que lien logique; la charge maximale autorisée du trafic de données sur le lien logique; la vitesse réelle du lien logique; et/ou le nombre de liaisons physiques actives utilisées par le lien logique.

5. Noeud d'accès (3) selon l'une quelconque des revendications 1 à 4, dans lequel le noeud de réseau d'agrégation est le noeud de passerelle de réseau (2) dans le réseau d'accès à large bande (1).

6. Procédé pour enregistrer des capacités de transmission dans un réseau d'accès à large bande (1), ledit procédé étant **caractérisé en ce qu'**il comprend les étapes consistant à:
a) déterminer au moins une caractéristique dans un noeud d'accès (3) se rapportant à la capacité de liaison montante d'un lien logique entre le noeud d'accès (3) et un noeud de réseau d'agrégation (2; 4A, ..., 4 N) dans le réseau d'accès à large bande (1);
b) déterminer la capacité de liaison montante du lien logique sur la base de l'au moins une caractéristique déterminée dans le noeud d'accès (3); et
c) fournir un noeud de passerelle de réseau (2) dans le réseau d'accès à large bande (1) d'un accès à la capacité de liaison montante déterminée de la liaison logique.

7. Procédé selon la revendication 6, dans lequel les étapes a) à c) sont exécutées lors du démarrage du noeud d'accès (3) et/ou lors de la détection dans le noeud d'accès (3) d'une modification de l'une quelconque ou plusieurs des caractéristiques dans le noeud d'accès (3) se rapportant à la capacité de liaison montante du lien logique.

8. Procédé selon la revendication 7, comprenant en outre les étapes consistant à:
d) attendre d'une période de temps prédéterminée lors de la détection d'un changement dans l'une quelconque ou plusieurs des caractéristiques dans le noeud d'accès (3) se rapportant à la capacité de liaison montante du lien logique; et
e) exécuter les étapes a) à c) après l'expiration de ladite période de temps prédéterminée si le changement détecté dans l'une quelconque ou plusieurs des caractéristiques est encore valide.

9. Noeud de base de données de ressources (6) compris dans ou relié de manière communicative à un noeud de passerelle de réseau (2) dans un réseau d'accès à large bande (1), **caractérisé en ce que** le noeud de base de données de ressources (6) est agencé pour
recevoir un message provenant d'un noeud d'accès (3) comprenant une capacité de liaison montante déterminée d'un lien logique entre le noeud d'accès (3) et un noeud de réseau d'agrégation (2; 4A, ..., 4 N) dans le réseau d'accès à large bande (1); et
mettre à jour des informations relatives au noeud d'accès (3) dans le noeud de base de données de ressources (6) sur la base de la capacité de liaison montante déterminée du lien logique dans le message reçu.

10. Procédé pour enregistrer des capacités de transmission à un noeud de base de données de ressources (6) compris dans ou relié de manière communicative à un noeud de passerelle de réseau (2) dans un réseau d'accès à large bande (1), ledit procédé étant **caractérisé en ce que** le procédé comprend les étapes consistant à:
recevoir un message provenant d'un noeud d'accès (3) comprenant une capacité de liaison montante déterminée d'un lien logique entre le noeud d'accès (3) et un noeud de réseau d'agrégation (2; 4A, ..., 4 N) dans le réseau d'accès à large bande (1); et
mettre à jour des informations relatives au noeud d'accès (3) dans le noeud de base de données de ressources (6) sur la base de la capacité de liaison montante déterminée du lien logique dans le message reçu.

11. Noeud de passerelle de réseau (2) à utiliser dans un réseau d'accès à large bande (1), **caractérisé en ce que** le noeud de passerelle de réseau (2) est agencé pour
recevoir un message provenant d'un noeud d'accès (3) comprenant une capacité de liaison montante déterminée d'un lien logique entre le noeud d'accès (3) et un noeud de réseau d'agrégation (2; 4A, ..., 4 N) dans le réseau d'accès à large bande (1); et
mettre à jour des informations hiérarchiques de programmation se rapportant au noeud d'accès (3) utilisé par un planificateur hiérarchique (8) dans le noeud de passerelle de réseau (2) sur la base de la capacité de liaison montante déterminée du lien logique dans le message reçu.

12. Procédé pour enregistrer des capacités de transmission dans un noeud de passerelle de réseau (2) à utiliser dans un réseau d'accès à large bande (1), ledit procédé étant **caractérisé en ce que** le procédé comprend les étapes consistant à:
recevoir un message provenant d'un noeud d'accès (3) comprenant une capacité de liaison montante déterminée d'un lien logique entre le noeud d'accès (3) et un noeud de réseau d'agrégation (2; 4A, ..., 4 N) dans le réseau d'accès à large bande (1); et
mettre à jour des informations hiérarchiques de programmation se rapportant au noeud d'accès (3) utilisé par un planificateur hiérarchique (8) dans le noeud de passerelle de réseau (2) basé sur la capacité de liaison montante déterminée du lien logique dans le message reçu.

13. Réseau d'accès à large bande (1) comprenant un noeud d'accès (3) selon l'une quelconque des revendications 1 à 5, un noeud de base de données de ressources (6) selon la revendication 9 et/ou un noeud de passerelle de réseau (2) selon la revendication 11.

14. Produit de programme informatique destiné à être utilisé dans un noeud d'accès (3) dans un réseau d'accès à large bande (1), qui comprend un moyen de code lisible par un ordinateur qui, lorsqu'il est exécuté dans une unité de traitement dans le noeud d'accès (3) entraîne ledit noeud d'accès (3) à exécuter les étapes consistant à:
déterminer au moins une caractéristique dans le noeud d'accès (3) se rapportant à la capacité de liaison montante d'un lien logique entre le noeud d'accès (3) et un noeud de réseau d'agrégation (2; 4A, ..., 4 N) dans le réseau d'accès à large bande (1);
déterminer la capacité de liaison montante du lien logique sur la base de l'au moins une caractéristique déterminée dans le noeud d'accès (3); et
fournir un noeud de passerelle de réseau (2) dans le réseau d'accès à large bande (1) d'un accès à la capacité de liaison montante déterminée du lien logique.

15. Produit de programme informatique selon la revendication 14, comprenant un moyen de code lisible par ordinateur qui, lorsqu'il est exécuté dans l'unité de traitement dans le noeud d'accès (3) entraîne le noeud d'accès (3) à effectuer en outre les étapes selon la revendication 7 ou 8.

16. Produit de programme informatique destiné à être utilisé dans un noeud de base de données de ressources (6) dans un réseau d'accès à large bande (1), qui comprend un moyen de code lisible par un ordinateur qui, lorsqu'il est exécuté dans une unité de traitement dans le noeud de base de données de ressources (6), entraîne ledit noeud de base de données de ressources (6) à exécuter les étapes consistant à:
recevoir un message provenant d'un noeud d'accès (3) comprenant une capacité de liaison montante déterminée d'un lien logique entre le noeud d'accès (3) et un noeud de réseau d'agrégation (2; 4A, ..., 4 N) dans le réseau d'accès à large bande (1); et
mettre à jour des informations relatives au noeud d'accès (3) dans le noeud de base de données de ressources (6) sur la base de la capacité de liaison montante déterminée du logique dans le message reçu.

17. Produit de programme informatique destiné à être utilisé dans un noeud de passerelle de réseau (2) dans un réseau d'accès à large bande (1), qui comprend un moyen de code lisible par un ordinateur qui, lorsqu'il est exécuté dans une unité de traitement dans le noeud de passerelle de réseau (2), entraîne ladite ressource le noeud passerelle de réseau (2) à exécuter les étapes consistant à:
recevoir un message provenant d'un noeud d'accès (3) comprenant une capacité de liaison montante déterminée d'un lien logique entre le noeud d'accès (3) et un noeud de réseau d'agrégation (2; 4A, ..., 4 N) dans le réseau d'accès à large bande (1); et
mettre à jour des informations hiérarchiques de programmation se rapportant au noeud d'accès (3) utilisé par un planificateur hiérarchique (8) dans le noeud de passerelle de réseau (2) sur la base de la capacité de liaison montante déterminée du lien logique dans le message reçu.

18. Produit de programme informatique selon l'une quelconque des revendications 14 à 17, dans lequel ledit moyen de code est mémorisé sur un support de stockage lisible.
